Europäisches Patentamt

European Patent Office

Office européen des brevets

(19)

(11) Veröffentlichungsnummer : **0 372 663 B1**

# (12) EUROPÄISCHE PATENTSCHRIFT

(45) Veröffentlichungstag der Patentschrift :
**23.12.92 Patentblatt 92/52**

(51) Int. Cl.$^5$ : **B23K 20/12, B23K 11/02**

(21) Anmeldenummer : **89250037.2**

(22) Anmeldetag : **18.09.89**

(54) **Verfahren zur Befestigung eines scheibenförmigen, rotationssymmetrischen Formkörpers auf einer Welle.**

(30) Priorität : **04.10.88 DE 3834080**

(43) Veröffentlichungstag der Anmeldung :
**13.06.90 Patentblatt 90/24**

(45) Bekanntmachung des Hinweises auf die
Patenterteilung :
**23.12.92 Patentblatt 92/52**

(84) Benannte Vertragsstaaten :
**BE CH DE ES FR GB IT LI NL SE**

(56) Entgegenhaltungen :
**DE-A- 1 627 594**
**DE-A- 2 216 560**
**US-A- 2 998 646**
**US-A- 3 768 342**
**US-A- 4 621 760**

(73) Patentinhaber : **MANNESMANN**
**Aktiengesellschaft**
**Mannesmannufer 2**
**W-4000 Düsseldorf 1 (DE)**

(72) Erfinder : **Janssen, Manfred, Dr.-Ing.**
**Moerser Strasse 398**
**W-4150 Krefeld (DE)**
Erfinder : **Vogt, Gerd, Dr.-Ing.**
**Brucknerstrasse 18**
**W-4005 Meerbusch (DE)**
Erfinder : **Niederhoff, Kurt, Dr.-Ing.**
**Vogelbeerweg 10**
**W-4030 Ratingen (DE)**

(74) Vertreter : **Presting, Hans-Joachim, Dipl.-Ing.**
**Meissner & Meissner Patentanwaltsbüro et al**
**Hohenzollerndamm 89**
**W-1000 Berlin 33 (DE)**

EP 0 372 663 B1

**Beschreibung**

Die Erfindung betrifft ein Verfahren zur Befestigung eines im wesentlichen scheibenförmigen, rotationssymmetrischen metallischen Formkörpers auf einer metallischen Welle mit kreisförmigem Querschnitt in definierter axialer Position durch Verschweißen von auf beiden Teilen angearbeiteten einander entsprechenden rotationssymmetrischen Fügeflächen nach einem Preßschweißverfahren, bei dem eine einteilig ausgeführte Welle verwendet wird und die Fügeflächen jeweils in der Weise angearbeitet werden, daß sie sich über einen Teil der Längenausdehnung der Welle erstrecken, wobei sich der Durchmesser der Fügeflächen in einer Richtung entlang der Achse vergrößert.

Ein Verfahren der gattungsgemäßen Art ist aus der DE-A-16 27 594 bekannt. Es handelt sich dabei um ein Reibungsschweißverfahren bzw. um eine Antriebswelle für Kraftfahrzeuge, bei welcher der Radbefestigungsflansch integral mit der Achse durch das Schweißverfahren ausgebildet wird. Bei einer bevorzugten Ausführungsform des Verfahrens weist der Flansch eine konische Aussparung auf, die ein entsprechend konisch ausgebildetes Wellenende aufnimmt. Als Vorteil für dieses Verfahren wird geltend gemacht, daß eine homogene Verschweißung hoher Qualität erzielt wird, die besser ist als die, die sich mit den zuvor bekannten Reibungsschweißverfahren erreichen ließ.

Als Preßschweißverfahren sind im übrigen das Kondensatorentladungsschweißen und das Reibschweißen seit Jahren als Techniken zur Verbindung metallischer Formkörper bekannt. In der DE-A--22 20 898 ist beispielsweise ein Reibschweißverfahren beschrieben, bei dem zwei zylindrische Vollprofile stirnseitig miteinander verschweißt werden. Aus der DE-C-21 23 634 ist ein weiteres Reibschweißverfahren entnehmbar, das für die Verschweißung von rotationssymmetrischen Hohlprofilen geeignet ist. Diese Hohlprofile werden ebenfalls an ihren Stirnseiten miteinander verbunden. Ferner ist aus der DE-C-29 29 832 ein Reibschweißverfahren zur Verbindung von zwei Rohren bekannt, von denen das eine aus einem Werkstoff (z.B. Aluminium) mit einem deutlich geringeren Formänderungswiderstand als das andere (z.B. aus Eisen oder Kupfer) gefertigt wurde. Bei diesem Verfahren wird das "weichere" Rohr durch das "steifere" Rohr, dessen Ende im Bereich der vorgesehenen Fügestelle eine konische Abschrägung aufweist, beim Zusammenschieben der zu verbindenden Rohrenden etwa in Form einer Muffe aufgeweitet. Die Aufweitung wird durch ein um das Ende des "weicheren" Rohres gelegtes Außenwerkzeug begrenzt, so daß der zur Verschweißung zwischen den beiden Rohrenden erforderliche Anpreßdruck trotz des geringen Formänderungswiderstandes des "weicheren" Rohres aufgebracht werden kann.

Der grundsätzliche Bewegungsablauf im Hinblick auf die Annäherung der zu verschweißenden Werkstücke ist beim Kondensatorentladungsschweißen ähnlich wie beim Reibschweißen. Während bei letzterem die zur Verschweißung erforderliche Wärmeenergie als Reibungswärme durch relative Rotation zwischen den Werkstücken erzeugt wird, wird die erforderliche Temperaturerhöhung beim Kondensatorentladungsschweißen durch Widerstandserwärmung infolge eines impulsartigen elektrischen Entladevorgangs erreicht.

Die bisher bekannten Reib- und Kondensatorentladungsschweißverfahren haben sich für die stirnseitige Verbindung von rotationssymmetrischen Formkörpern im Sinne von Stumpfnahtschweißungen gut bewährt. Sie eignen sich jedoch nur bedingt zur Verbindung von im wesentlichen scheibenförmigen, rotationssymmetrischen Formkörpern mit einer dem Wellensitz entsprechenden Durchgangsbohrung auf dieser Welle.'Derartige Formkörper können z.B. Zahnräder, Kupplungsteile oder auch scheibenförmige Rohlinge sein, die noch mechanisch bearbeitet werden müssen. Eine drehfeste Verbindung von z.B. Zahnrädern auf Wellen erfolgt insbesondere bei größeren Wellendurchmessern vielfach durch bekannte Mitnehmerverbindungen wie Paßfedern, Keilwellen, Kerbverzahnungen oder ähnliches. Ruch das Aufschrumpfen von Radnaben auf einen Wellensitz ist gebräuchlich. Im kleinen Abmessungsbereich, beispielsweise bei Getriebewellen für Pkw-Getriebe, werden Wellen und Zahnräder üblicherweise einstückig aus dem vollmaterial gefertigt, wobei als Rohlinge entsprechend vorgeformte Schmiedeteile eingesetzt werden. Es handelt sich hierbei um ein sehr aufwendiges verfahren. Hinzu kommt, daß der Trend zur Gewichtsersparnis zu der Forderung führt, die Getriebewellen als Hohlwellen auszubilden. Das ist schmiedetechnisch praktisch nicht möglich. Ein nachträgliches Ausbohren der Wellen wäre zu aufwendig.

Es besteht daher ein Bedarf für eine geeignete Technik zur Verbindung von scheibenförmigen, rotationssymmetrischen Formkörpern wie z.B. Zahnrädern auf Hohlwellen. Die vorgenannten Verbindungstechniken sind hierfür technisch oder aus Kostengründen nicht geeignet. So kann beispielsweise das Aufschrumpfen nicht angewandt werden, da wegen der geringen Wanddicke der Hohlwelle der für eine sichere drehfeste Verbindung erforderliche Schrumpfdruck nicht gewährleistet werden kann Wünschenswert wäre aber eine flächige Verschweißung der Nabe eines Zahnrades oder sonstigen Formkörpers auf dem Wellensitz.

Um z.B. eine Getriebewelle mit einem Zahnrad zu verschweißen, ist es prinzipiell möglich, die Getriebewelle geteilt auszuführen und in bekannter weise jeweils stirnseitig stumpf mit dem Zahnrad zu verbinden Ein solches Verfahren wirft jedoch erhebliche fertigungstechnische Probleme auf, da nicht nur die ko-

2

axiale Ausrichtung von Zahnrad und Welle genau sein muß, sondern darüberhinaus auch ein Achs- oder Winkelversatz zwischen den Wellenabschnitten vermieden werden muß. Außerdem sind für die Erzeugung einer Getriebewelle an jedem Zahnrad stets zwei Schweißvorgänge mit entsprechenden Umrüst- bzw, Umspannmaßnahmen erforderlich, was in kostenmäßiger und zeitlicher Hinsicht unerwünscht ist.

Eine lediglich stirnseitige Verschweißung der Nabe eines Zahnrades mit dem stirnseitigen Teil eines Wellenabsatzes einer einteiligen welle nach der Reibschweiß- oder Kondensatorentladungsmethode kommt als Lösungsmöglichkeit grundsätzlich ebenfalls in Frage. Dies erfordert auf der welle am Ort dieses Absatzes eine beträchtliche Materialanhäufung, die bei Vollwellen nach dem Schmiedeverfahren sicherlich realisierbar ist. Bei der Verwendung von Hohlwellen, bei der man zweckmäßigerweise von normalen Rohrabschnitten als Vormaterial ausgeht, sind einer entsprechenden Umformung des Rohres zur Erzeugung eines ausreichend hohen Absatz jedoch Grenzen gesetzt, die eine solche Verbindung häufig von vornherein ausschließen.

Aus der US- A- 4 659 005 ist es bekannt, einen scheibenförmigen Formkörper mittels Reibschweißen auf einer Welle zu befestigen. Die Welle ist hierzu mit einem Absatz versehen, dessen Stirnseite die Fügefläche zum Formkpörper hin bildet. Da der Absatz eine relativ kleine radiale Ausdehnung besitzt, findet beim Fügevorgang eine gewisse Deformation der Fügefläche in axialer Richtung der Welle statt. Als Ergebnis wird hierbei eine einseitige Verschweißung des Formkörpers mit der Welle erreicht, also nicht eine in axialer Richtung der Welle gesehen großflächige Verschweißung. Hinzu kommt, daß die Welle mindestens zweiteilig ausgeführt ist, so daß eine weitere Reibschweißverbindung zur Zusammenfügung der beiden Wellenteile erforderlich ist.

Aufgabe der Erfindung ist es daher, ein gattungsgemäßes Verfahren dahingehend weiterzuentwickeln, daß die Verschweißung scheibenförmiger Formkörper in einem einzigen Schweißvorgang auch auf einteiligen Hohlwellen, die nach bekannten Verfahren aus Rohren hergestellt werden, uneingeschränkt möglich ist. Die Verschweißung soll verzugsarm, in Richtung der Wellenachse möglichst großflächig und mit hoher Genauigkeit hinsichtlich der Positionierung des Formkörpers auf der Welle erfolgen.

Diese Aufgabe wird erfindungsgemäß gelöst durch ein Verfahren mit den Merkmalen des Patentanspruchs 1, das durch die Merkmale der Unteransprüche 2 bis 7 in vorteilhafter Weise weiter ausgestaltet werden kann.

Der grundsätzliche Lösungsgedanke der Erfindung ist zum einen darin zu sehen, daß Fügeflächen, d.h. die Bereiche auf der äußeren Wellenoberfläche bzw. auf der Innenoberfläche der Nabe des Formkörpers, die möglichst großflächig miteinander verschweißt werden sollen, nicht mehr in einer Ebene liegen, die senkrecht zur Rotationsachse steht, sondern daß diese Fügeflächen gleichsam über einen Abschnitt der Welle "gestreckt" werden. Dieses Strecken der Fügefläche vermeidet die Notwendigkeit zu sehr großen sprunghaften Durchmessererweiterungen, die auf keinen fall zu starke Schwächungen der Wanddicke mit sich bringen dürfen. Mit Vorteil erfolgt die Streckung der Fügeflächen so, daß sie als Mantelflächen eines Kegelstumpfes konisch verlaufen. Sie können auch stufenförmig als Zylinderabschnitte mit zunehmendem Außendurchmesser ausgebildet sein.

Für manche Anwendungen kann es auch vorteilhaft sein, zylindrische und konische Abschnitte der Fügeflächen abwechselnd hintereinander anzuordnen. In den beiden letztgenannten Ausführungsformen werden für die eigentliche Verschweißung jeweils die senkrecht zur Rotationsachse stehenden Ringflächen der Zylinderabschnitte bzw. die konischen Flächenteile benutzt; die als Zylindermantel ausgebildeten Flächenteile dienen zur genauen Zentrierung und Winkelausrichtung von Wellen- und Formkörperdrehachse.

Der andere wesentliche Teil des Lösungsgedanken besteht darin, daß zumindest auf einer der beiden Fügeflächen von Welle und Formkörper eine Profilierung aufgebracht wird, indem z.B. umlaufende Rillen in eine der konischen Führungsflächen eingedreht werden. Auch punktuelle Erhöhungen oder Vertiefungen in der Oberfläche sind möglich. Dadurch wird gewährleistet, daß bereits eine großflächige Erwärmung der Schweißzone stattfinden kann und dennoch wegen des freien Volumens zwischen den Profilierungen noch merkliche axiale Verschiebungen zwischen Formkörper und Welle möglich sind, so daß trotz Fertigungstoleranzen in der Gestaltung der Fügeflächen stets eine exakte Positionierung des Formkörpers auf der Welle erfolgt. Insbesondere bei konischen Fügeflächen könnte es ohne eine solche durch die Profilierung erzeugte "Weichheit" gegenüber Axialverschiebungen während des Schweißens zu Problemen kommen, wenn die Durchmesser der Fügeflächen des Formkörpers an der oberen und der Welle an der unteren Grenze des jeweiligen Toleranzfeldes liegen würden oder umgekehrt, weil sich dann die Fertigungsabweichungen addieren würden. In letzterem Fall könnte ein zusätzlicher Anschlag auf der Welle zur Fixierung der axialen Position Abhilfe schaffen.

Das erfindungsgemäße Verfahren läßt nicht nur die problemlose Verschweißung unterschiedlicher Werkstoffe zu, sondern ermöglicht auch die sichere Befestigung bereits vollständig fertigbearbeiteter Formkörper wie Zahnräder oder dergleichen auf einer Welle, die selbstverständlich auch aus Vollmaterial bestehen können.

Mit besonderem Vorteil wird das Verfahren jedoch auf die Verbindung von Formkörpern mit Hohlwellen angewandt. Grundsätzlich gilt, daß das Verfahren eine verzugsarme Verbindung ermöglicht, da die zur sicheren Verschweißung erforderliche Energie gering gehalten und genauestens dosiert werden kann, so daß die Wärmeeinflußzone eng begrenzt bleibt. Dies gilt insbesondere für das Kondensatorentladungsschweißen.

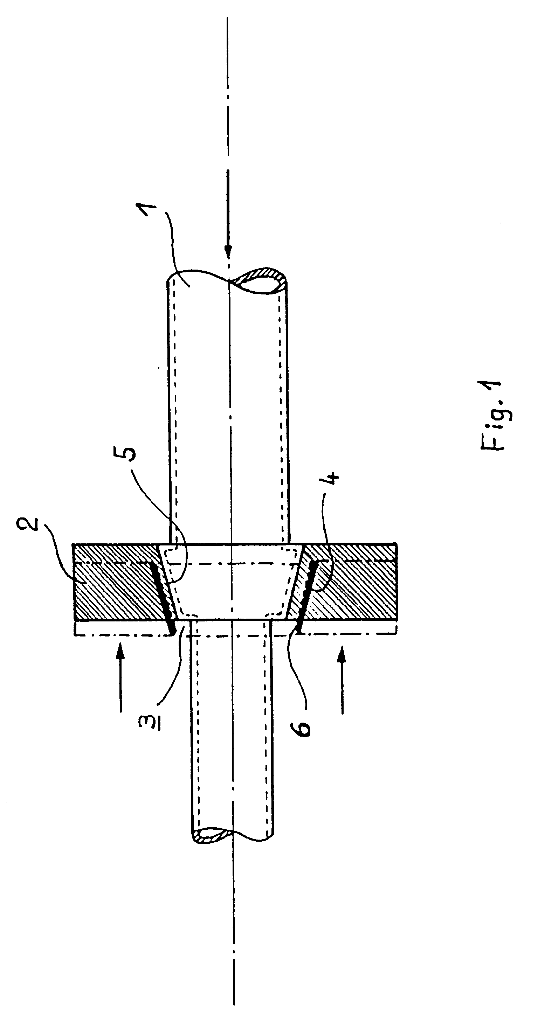

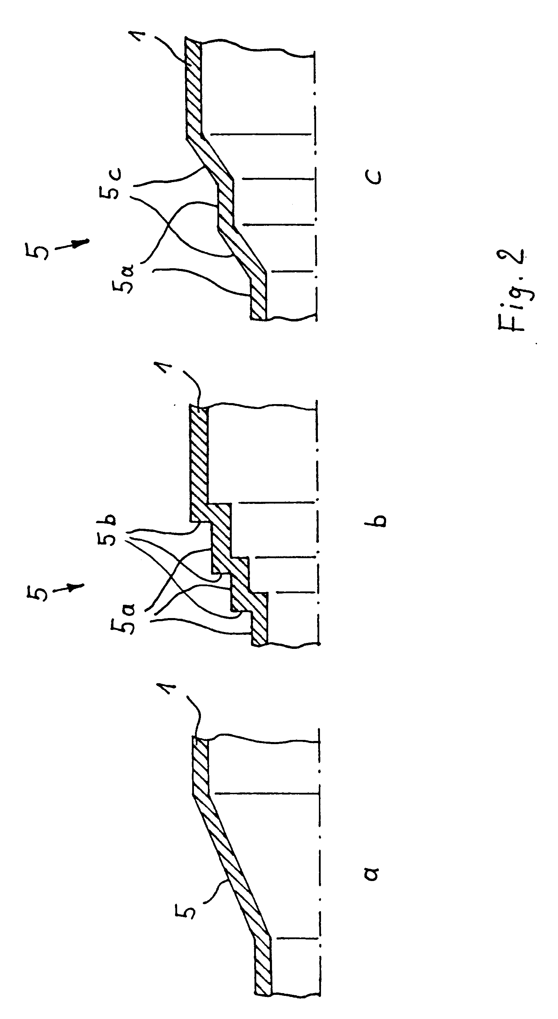

Anhand der in den Figuren 1 und 2 dargestellten Ausführungsbeispiele wird die Erfindung näher erläutert. Es zeigen:

Fig. 1 einen axialen Längsschnitt durch eine erfindungsgemäße Formkörper/Wellen-Verbindung mit konischen Fügeflächen,

Fig. 2 verschiedene Ausführungsformen von Fügeflächen.

In Fig. 1 ist eine erfindungsgemäße Verbindung zwischen einer Welle 1 in Form einer Hohlwelle und einem als scheibenförmiges Rad ausgebildeten Formkörper im axialen Längsschnitt dargestellt. Die Welle 1 weist eine Fügefläche 5 auf, die als Kegelstumpfmantel geformt ist. Der Formkörper 2, der in Fig. 1 zusätzlich in strichpunktierter Form in einer Position vor Beginn des Schweißens dargestellt ist, hat eine Ausnehmung 3, durch die die Welle 1 geführt ist. Die innere Oberfläche dieser Ausnehmung 3 ist als Fügefläche 4 bezeichnet und entspricht in ihrer Form der Fügefläche 5, d.h. beide ergänzen sich beim Zusammenschieben, welches durch eingezeichnete Pfeile symbolisiert wird, in komplementärer Weise.

Die Fügefläche 4 ist mit umlaufenden Profilierungen 6 versehen, die schematisch in der strichpunktierten Darstellung des Formkörpers 2 als geschwärzte Fläche angedeutet sind, Sobald die Oberfläche der Profilierungen 6 die Fügefläche 5 berührt hat, kann der Schweißvorgang beginnen. Beim Reibschweißen erfolgt also eine flächenhafte Erwärmung durch Reibung infolge der relativen Drehung zwischen Welle 1 und Formkörper 2, während die Erwärmung beim Kondensatorentladungsschweißen durch die Stromwärme erfolgt.

Sobald die Schweißtemperatur erreicht ist, wird der Formkörper 2 in seine endgültige exakte Position auf der Welle 1 gedrückt, wobei die Profilierungen 6 verformt werden und eine innige großflächige Verbindung zwischen den Fügeflächen 4 und 5 des Formkörpers 2 und der Welle 1 eintritt. Der Verschiebespielraum zwischen Formkörper 2 und Welle 1 läßt sich durch die Gestaltung der Profilierungen 6, d.h. durch die Größe der als Rillen geformten Hohlräume beeinflussen. In der Regel wird eine Profilierung einer der beiden Fügeflächen 4, 5 ausreichen; es können jedoch auch beide profiliert werden.

Fig. 2 zeigt verschiedene Abwandlungen der Fügeflächen einer Welle 1 in schematischer Form. Die Variante a entspricht mit ihrer konischen Fügefläche 5 dem Ausführungsbeispiel in Fig.1, während die Variante b eine gestufte Fügefläche 5 aufweist, die aus aneinandergefügten Zylinderabschnitten 5a mit ringförmigen Stirnflächen 5b besteht. Die Zylinderabschnitte 5a dienen der Zentrierung eines mit der Welle 1 zu verbindenden Formkörpers, während die Verschweißung mit diesen an den Stirnflächen 5b erfolgen soll, die zu diesem Zweck mit (hier nicht dargestellten) Profilierungen versehen sind.

Diese Profilierungen ermöglichen in dieser Variante ebenfalls den Ausgleich von Fertigungstoleranzen und zwar solchen, die sich auf die äußere Länge der Zylinderabschnitte, also auf die Tiefe der einzelnen Stufen in der äußeren Kontur beziehen.

Die in der Darstellung c gezeigte Variante weist abwechselnd Zylinderabschnitte 5a und konische Abschnitte 5c der Fügefläche 5 auf. Die Zylinderabschnitte 5a dienen wiederum zur Zentrierung eines Formkörpers auf der Welle 1 und die Abschnitte 5c sind für die Schweißverbindung vorgesehen.

## Patentansprüche

1. Verfahren zur Befestigung eines im wesentlichen scheibenförmigen, rotationssymmetrischen metallischen Formkörpers (2) auf einer metallischen Welle (1) mit kreisförmigem Querschnitt in definierter axialer Position durch Verschweißen von auf beiden Teilen angearbeiteten einander entsprechenden rotationssymmetrischen Fügeflächen (4 bzw. 5) nach einem Preßschweißverfahren, bei dem eine einteilig ausgeführte Welle (1) verwendet wird und die Fügeflächen (4 bzw. 5) jeweils in der Weise angearbeitet werden, daß sie sich über einen Teil der Längenausdehnung der Welle (1) erstrecken, wobei sich der Durchmesser der Fügeflächen (4, 5) in einer Richtung entlang der Achse vergrößert,
dadurch gekennzeichnet,
daß mindestens auf der Fügefläche (4 bzw. 5) eines der beiden Teile (2 bzw. 1) Profilierungen (6) eingearbeitet werden und daß der Formköper (2) während der Verschweißung der beiden mit ihren Fügeflächen (4, 5) dicht aneinandergeschobenen Teile (1, 2) unter Deformation der Profilierungen (6) in die definierte axiale Position auf der Welle (1) gebracht wird.

2. Verfahren nach Anspruch 1,
dadurch gekennzeichnet,
daß die Fügeflächen (4, 5) konusförmig ausgebildet werden.

3. Verfahren nach Anspruch 1,
dadurch gekennzeichnet,
daß die Fügeflächen (4, 5) in Form gestufter Zylinder (5a) ausgebildet werden.

**4.** Verfahren nach Anspruch 1,
dadurch gekennzeichnet,
daß die Fügeflächen (4, 5) abschnittsweise abwechselnd konusförmig (5c) und als gestufte Zylinder (5a) ausgebildet werden.

**5.** Verfahren nach einem der Ansprüche 1 bis 4,
dadurch gekennzeichnet,
daß als Welle (1) eine Hohlwelle verwendet wird.

**6.** Verfahren nach einem der Ansprüche 1 bis 5,
dadurch gekennzeichnet,
daß für die Welle (1) und den Formkörper (2) unterschiedliche Stahlwerkstoffe verwendet werden.

**7.** Verfahren nach einem der Ansprüche 1 bis 6,
dadurch gekennzeichnet,
daß als Welle (1) und/oder Formkörper (2) mechanisch fertigbearbeitete und ggf. wärmebehandelte und/oder oberflächenbeschichtete Teile verwendet werden.

**Claims**

**1.** Method for securing an essentially disc-shaped, rotationally symmetrical metallic formed body (2) to a metallic shaft (1) with a circular cross section in a defined axial position by welding together rotationally symmetrical joining faces (4 and 5), which correspond to one another and are attached to the two parts, according to a pressure welding process, in which a one-piece shaft (1) is used and the joining faces (4 and 5) are in each case attached such that they extend over a part of the longitudinal extent of the shaft (1), the diameter of the joining faces (4, 5) increasing in one direction along the axis, characterised in that profiles (6) are worked into the joining face (4 or 5) of at least one of the two parts (2 and 1), and that the formed body (2) is brought into the defined axial position on the shaft (1) while the two parts (1, 2), with their joining faces (4, 5) pushed tightly against one another, are welded together, the profiles (6) being deformed in the process.

**2.** Method according to claim 1, characterised in that the joining faces (4, 5) are conical.

**3.** Method according to claim 1, characterised in that the joining faces (4, 5) are in the form of a stepped cylinder (5a).

**4.** Method according to claim 1, characterised in that the joining faces (4, 5) are conical (5c) and in the form of a stepped cylinder (5a) in alternate sections.

**5.** Method according to one of claims 1 to 4, characterised in that a hollow shaft is used as the shaft (1).

**6.** Method according to one of claims 1 to 5, characterised in that different steel materials are used for the shaft (1) and the formed body (2).

**7.** Method according to one of claims 1 to 6, characterised in that machine-finished and, if applicable, heat-treated and/or surface-coated parts are used as the shaft (1) and/or formed body (2).

**Revendications**

**1.** Procédé pour la fixation d'un corps métallique (2) essentiellement en forme de disque, à symétrie de révolution, sur un arbre métallique (1) présentant une section transversale de forme circulaire dans une position axiale définie, par le soudage de surfaces de joint (4 ou 5) correspondantes, à symétrie de révolution, agencées sur les deux éléments, suivant un procédé de soudage par pression, dans lequel un arbre (1) formé d'une seule pièce est utilisé et les surfaces de joint (4 ou 5) sont, à chaque fois, agencées, de sorte qu'elles s'étendent sur une partie de la longueur de l'arbre (1), le diamètre des surfaces de joint (4,5) augmentant dans une direction le long de l'axe,
caractérisé en ce que, au moins sur la surface de joint (4 ou 5) d'un des deux éléments (2 ou 1), des profilages (6) sont usinés et en ce que, pendant le soudage des deux éléments (1,2) rapprochés très près l'un de l'autre par leurs surfaces de joint (4,5), le corps (2) est amené par la déformation des profilages (6) dans la position axiale définie sur l'arbre (1).

**2.** Procédé selon la revendication 1,
caractérisé en ce que les surfaces de joint (4,5) sont de forme conique.

**3.** Procédé selon la revendication 1,
caractérisé en ce que les surfaces de joint (4,5) sont en forme de cylindres à gradins (5a).

**4.** Procédé selon la revendication 1,
caractérisé en ce que les surfaces de joint (4,5) sont alternativement, de secteur en secteur, de forme conique (5c) et en forme de cylindres à gradins (5a).

**5.** Procédé selon l'une des revendications 1 à 4, caractérisé en ce que l'arbre utilisé (1) est creux.

**6.** Procédé selon l'une des revendications 1 à 5,

caractérisé en ce que des aciers différents sont utilisés pour l'arbre (1) et pour le corps (2).

7.  Procédé selon l'une des revendications 1 à 6, caractérisé en ce que des éléments élaborés mécaniquement et, le cas échéant, traités thermiquement et/ou plaqués sont utilisés pour l'arbre (1) et/ou le corps (2).

Fig. 1

EP 0 372 663 B1

Fig. 2